# EUROPÄISCHE PATENTANMELDUNG

(11) **EP 1 380 334 A1**
(43) Veröffentlichungstag der Anmeldung: **14.01.2004**
(21) Anmeldenummer: 03102083.7
(22) Anmeldetag: 10.07.2003
(51) Int. Cl.: B01D 46/52, B01D 29/07, B60H 3/06

(54) **Filterelement und ein Verfahren zu dessen Herstellung**

(30) Priorität: 10.07.2002 DE 10231060
(71) Anmelder: MANN+HUMMEL GmbH, 71638 Ludwigsburg (DE)
(72) Erfinder: Arnegger, Klaus, 71636, Ludwigsburg (DE)

(57) **Zusammenfassung**

Die Erfindung betrifft ein Filterelement mit zu einer Filterpatrone geformten Filterbahnen (2), die an den jeweiligen abzudichtenden Stirnseiten mit einem fest angefügten Seitenstreifen (3,4;5,6) umgeben sind. Die Seitenstreifen (4;5,6) weisen ein während der Herstellung des Filterelements (1) aufschäumbares Elastomer auf. Das aufschäumbare Elastomer (4) ist entweder in einer im Dichtungsbereich als Winkelprofil (3) angespritzten Nut angeordnet oder das aufschäumbare Elastomer (5,6) besteht aus einem Material, das mit einem angepassten Profil direkt im Dichtungsbereich auf das Filterelement (1) vor dem Aushärteprozess aufgebracht wird und unter Hitzeeinwirkung während eines Aushärteprozesses der Filterbahnen (2) sein Volumen vergrößert.

## Beschreibung

### Stand der Technik

Die Erfindung betrifft ein Filterelement, bzw. eine Filterpatrone, und ein Verfahren zu dessen Herstellung, nach der Gattung des Hauptanspruchs und der Nebenansprüche.

Es ist bereits aus der DE-OS 26 20 148 ein Filterelement bekannt, dass aus gewellten Papierfilterbahnen aufgebaut ist und an seinen Seiten- bzw. Stirnflächen mit Seitenstreifen umgeben ist, die mit einem Klebstoff fest an die Filterbahnen angeklebt sind. Die Seitenstreifen sind hier aus einem vorgeformten aufgeschäumten Kunststoff hergestellt und dienen insbesondere der Abdichtung des Filterelementes gegenüber der Halterung des Filterelements.

Um das Herstellungsverfahren zu vereinfachen, ist außerdem aus der DE 197 37 700 A1 bekannt, dass die Seitenstreifen ebenso wie die Filterbahnen aus einer Papierbahn hergestellt und zusätzlich mit einer Klebeschicht versehenen sind. Da auf der Klebeschicht mindestens ein reißfester Faden oder ein entsprechendes Band angeordnet ist, kann eine ausreichende Festigkeit des Seitenstreifens erreicht werden.

### Aufgabenstellung

Der Erfindung liegt die Aufgabe zugrunde, ein Filterelement der eingangs genannten Art so weiterzubilden, dass es mit einfachen Mitteln herstellbar ist.

### Vorteile der Erfindung

Das erfindungsgemäße Filterelement ist in vorteilhafter Weise geeignet, ausgehend von der gattungsgemäßen Art, die gestellte Aufgabe mit den kennzeichnenden Merkmalen des Hauptanspruchs und der zugehörigen Herstellungsansprüche dadurch zu lösen, dass das Filterelement mit den zu einer Filterpatrone geformten Filterbahnen mit Seitenstreifen aus einem während der Herstellung des Filterelements aufschäumbaren Elastomer aufgebaut ist. Das Filterelement kann dabei bevorzugt Bestandteil eines Luftfilters für ein Kraftfahrzeug sein.

Gemäß einer ersten vorteilhaften Ausführungsform ist das aufschäumbare Elastomer, z.B. Polyurethan (PUR), in einer im Dichtungsbereich als Winkelprofil angespritzten Nut angeordnet. Auf einfache Weise kann dabei z.B. für eine rechteckige Filterpatrone im Dichtungsbereich ein Rahmen aus Kunststoff als Winkel-Profil angebracht sein, das mit der angespritzten, vorzugsweise halbkreisförmigen umlaufenden Nut zum Eindosieren der Schaumdichtung versehen ist. In vorteilhafter Weise kann das Spritzgussteil dünnwandig und verzugsarm aus einem schnellfließenden, hochkristallinen Polypropylen mit einer extrem kurzen Zykluszeit gefertigt werden. Diese halbkreisförmige Nut oder Umlaufrinne mit beispielsweise abgerundeten Ecken ermöglicht einen gleichmäßigen Profilquerschnitt der Dichtung mit einem durchschnittlichem Verformungsweg, so dass konventionelle Gießschalen dadurch entfallen können. Die Erfindung ermöglicht hiermit eine Herstellung von Filterelementen mit großer Stückzahl und hoher Reproduzierbarkeit bei relativ großer Standzeit der Spritzgussformen.

Die Verbindung der Seitenstreifen bzw. dem Filterrahmen aus dem Winkelprofil mit den Filterbahnen aus Papier ist auf einfache Weise beispielsweise in der Aushärtphase beim Ofendurchlauf in der Aushärtephase des Filterpapiers realisierbar. Eine Reaktion der Imprägnierung des Filterpapiers ist über einen im Thermoplast vorgesehenem Haftvermittler mit dem Kunststoff (z.B. PPHC)des Seitenstreifens auf den für das Aushärten erforderlichen Wärmebedarf auf einfache Weise abstimmbar.

Die Verbindung von Rahmen und dem Medium Vlies kann andererseits auch über einen verlängerten Rahmenschenkel mittels eines Laserstrahl-Schweißverfahrens, z.B. mit einem Dioden-Laserstrahl, durch den transparenten leicht angepressten Rahmen erfolgen. Für eine bessere Haftung kann die Stirnkantenverleimung mit Polyester entsprechend abgestimmt werden.

Gemäß einer zweiten Ausführungsform ist der Seitenstreifen aus einem unter Hitzeeinwirkung während eines Aushärteprozesses der Filterbahnen aufschäumbaren Elastomer gebildet und mit einem angepassten Profil direkt im Dichtungsbereich auf das Filterelement vor dem Aushärteprozess aufgebracht. Bevorzugt ist das aufschäumbare Elastomer ein Kunststoff aus Ethylen Vinyl Acetat (EVA), dessen Volumen bis auf ca. das dreifache unter Hitzeeinwirkung vergrößerbar ist.

Dadurch, dass sich die Seitensteifen bzw. der Patronenrahmen nach der zweiten Ausführungsform mit einer entsprechend angepassten Profilierung beispielsweise spritzgießen und anschließend auf dem Papierbalg des Filterelements aufbringen lassen, ist eine einfache Herstellung gewährleistet. Dieser Spritzling schäumt unter nochmaliger Wärmezufuhr nach dem Spritzgussvorgang auf und vernetzt. Somit schäumt beim anschließenden Ofendurchlauf bei ca. 150 C° zur Aushärtung des Filterelements diese Rezeptur ca. auf das dreifache Volumen auf und ermöglicht dabei eine Haftung, vergleichbar wie PUR, mit dem Medium (Papier oder Vlies) und bildet bei entsprechender Gestaltung des Spritzgussprofils einen umlaufenden Dichtwulst. Der Energiebedarf für das Aushärten der Imprägnierung und dem Schäumvorgang kann dabei auf einfache Weise in Einklang gebracht werden.

### Zeichnung

Ausführungsbeispiele des erfindungsgemäßen Filterelements werden anhand der Figuren der Zeichnung erläutert. Es zeigen:
Figur 1 ein erstes Ausführungsbeispiel eines Filterelements mit einem aufschäumbaren Elastomer in einer im Dichtungsbereich als Winkelprofil angespritzten Nut und
Figur 2 ein zweites Ausführungsbeispiel eines Filterelements mit einem unter Hitzeeinwirkung während eines Aushärteprozesses der Filterbahnen aufschäumbaren Elastomer im Dichtungsbereich.

### Beschreibung der Ausführungsbeispiele

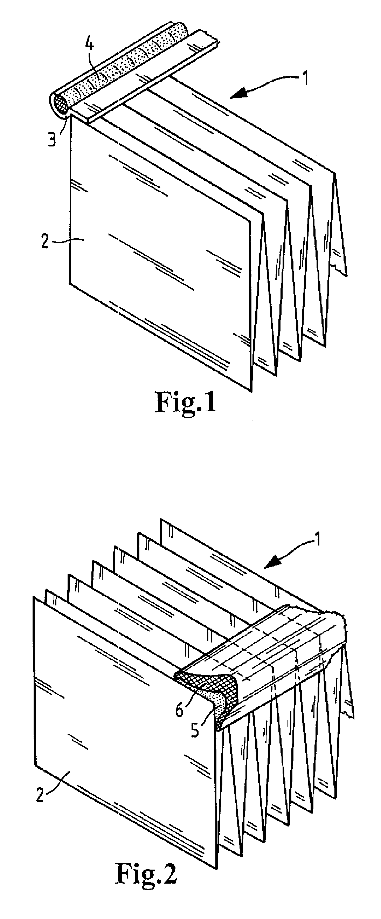

In Figur 1 der Zeichnung ist ein Filterelement 1 gezeigt, das gefaltete Papierfilterbahnen 2, beispielsweise zur Luftfilterung in einem Kraftfahrzeug, aufweist. An den Stirnseiten der Papierfilterbahnen 2 befinden sich Seitenstreifen 3.

Im Dichtungsbereich des Filterelements 1 ist eine als Winkelprofil angespritzte Nut 3 aus Kunststoff als Seitenstreifen angeordnet. Diese vorzugsweise halbkreisförmig umlaufende Nut ist zum Eindosieren einer Schaumdichtung 4 mit einem aufschäumbaren Elastomer, z.B. Polyurethan (PUR), ausgebildet.

Die Verbindung des Winkelprofils 3 als Seitenstreifen mit den Filterbahnen 2 aus Papier ist beispielsweise in der Aushärtephase beim Ofendurchlauf des Filterpapiers 2 realisierbar. Andererseits kann eine Verbindung des Winkelprofils 3 mit Filterbahnen 2 aus Vlies auch über einen verlängerten Rahmenschenkel mittels eines Laserstrahl-Schweißverfahrens, z.B. mit einem Dioden-Laserstrahl, durch das transparente, leicht angepresste Winkelprofil 3 erfolgen.

Anstelle des Winkelprofils kann auch ein Profil aus thermoplastischem Elastomer verwendet werden, das bereits selbst elastisch genug ist und eine Abdichtwirkung aufweist, so dass auf den Polyurethanschaum verzichtet werden kann.

Zur Befestigung des thermoplastischen Elastomers bietet es sich an, ein Nitrilkautschuk zu verwenden, welcher zwischen dem Elastomer und den Spitzen des Filterpapiers angeordnet ist. Dieser Nitrilkautschuk schäumt beim Ofendurchlauf leicht auf und schafft eine Verbindung zwischen Profil und Filterpapier.

Nach einem aus Figur 2 ersichtlichen zweiten Ausführungsbeispiel ist der Seitenstreifen aus einem unter Hitzeeinwirkung während eines Aushärteprozesses der Filterbahnen 2 aufschäumbaren Elastomer 5 gebildet. Das aufschäumbare Elastomer 5 wird zunächst mit einem angepassten Profil direkt im Dichtungsbereich auf das Filterelement 1 vor dem Aushärteprozess aufgebracht. Nach dem Aushärten ist das aufschäumbare Elastomer 5, z.B. Ethylen Vinyl Acetat (EVA), auf eine Volumenkontur 6 mit ca. dem dreifachen Volumen vergrößert, so dass sich auch hier eine optimale Dichtung herausbildet.

Das aufschäumbare Elastomer 5 ist in der Darstellung lediglich an einer Seite gezeigt. Selbstverständlich kann dies umlaufen, d.h. an allen vier Oberkanten des Filterelements angeordnet sein, so dass eine geschlossene Dichtfläche entsteht. Die zick-zack-förmig gefalteten Filtertaschen sind seitlich verschlossen. Das Elastomer mit seinem Profil wird entweder als Streifen- oder als Komplettprofil vor dem Aushärten auf das Filterelement aufgebracht.

## Patentansprüche

1. Filterelement mit
- zu einer Filterpatrone geformten Filterbahnen (2), die an den jeweiligen abzudichtenden Stirnseiten mit einem fest angefügten Seitenstreifen (3,4;5,6) umgeben sind,
**dadurch gekennzeichnet, dass**
- die Seitenstreifen (4;5,6) ein während der Herstellung des Filterelements (1) aufschäumbares Elastomer aufweisen.

2. Filterelement nach Anspruch 1, **dadurch gekennzeichnet, dass**
- das aufschäumbare Elastomer (4) in einer im Dichtungsbereich als Winkelprofil (3) angespritzten Nut angeordnet ist.

3. Filterelement nach Anspruch 1, **dadurch gekennzeichnet, dass**
- die Seitenstreifen aus einem unter Hitzeeinwirkung während eines Aushärteprozesses der Filterbahnen (2) aufschäumbaren Elastomer (5,6) bestehen und mit einem angepassten Profil direkt im Dichtungsbereich auf das Filterelement (1) vor dem Aushärteprozess aufgebracht sind.

4. Filterelement nach Anspruch 3, **dadurch gekennzeichnet, dass**
- das aufschäumbare Elastomer (5,6) aus Ethylen Vinyl Acetat (EVA) oder Nitrilkautschuk besteht, dessen Volumen bis auf ca. das dreifache unter Hitzeeinwirkung vergrößerbar ist.

5. Verfahren zur Herstellung eines Filterelements nach Anspruch 2, **dadurch gekennzeichnet, dass**
- auf die Filterpatrone (1) im Dichtungsbereich der Rahmen eine umlaufende Nut aus einem Kunststoffprofil (3) fest angebracht wird und dass
- vor oder nach einer Aushärtung der Filterbahnen (2) der Filterpatrone (1) das aufschäumbare Elastomer (4) in die Nut (3) eindosiert wird.

6. Verfahren nach Anspruch 5, **dadurch gekennzeichnet, dass**
- die Verbindung zwischen den Seitenstreifen (3) und Filterbahnen (2) aus Papier in der Aushärtephase des Filterpapiers (2) durch einen in der thermoplastischen Imprägnierung des Filterpapiers (2) vorgesehenen Haftvermittler während der Aushärtephase des Filterpapiers (2) in einem Ofen erfolgt.

7. Verfahren nach Anspruch 5, **dadurch gekennzeichnet, dass**
- die Verbindung zwischen den Seitenstreifen (3) und Filterbahnen (2) aus Vlies mittels eines Laserstrahl-Schweißverfahrens erfolgt.

8. Verfahren zur Herstellung eines Filterelements nach Anspruch 3 oder 4, **dadurch gekennzeichnet, dass**
- auf die Filterpatrone (1) im Dichtungsbereich das aufschäumbare Elastomer (5) vor dem Aushärteprozess aufgebracht wird und dass
- während und nach der Aushärtung der Filterbahnen (2) der Filterpatrone (1) das aufschäumbare Elastomer (5) sich in seinem Volumen (6) vergrößert.

9. Filterelement nach einem der vorhergehenden Ansprüche, **dadurch gekennzeichnet, dass**
- das Filterelement (1) Bestandteil eines Luftfilters für ein Kraftfahrzeug ist.
